# EUROPEAN PATENT APPLICATION

(11) **EP 0 990 462 A1**
(43) Date of publication of application: **05.04.2000**
(21) Application number: 99118923.4
(22) Date of filing: 25.09.1999
(51) Int. Cl.: B01D 53/50, B01D 53/56, B01D 53/62, B01D 53/60, B01D 53/66, B01D 53/82

(54) **A method of air cleaning by removal of gaseous impurities**

(30) Priority: 29.09.1998 CZ 312398
(71) Applicant: AGS Jicin a.s., 50648 Jicin (CZ)
(72) Inventor: Matzke, Vladimir, 50601 Jicin (CZ); Fischer, Petr, 46605 Jablonec n.N. (CZ)
(74) Representative: Bergmeier, Werner, Dipl.-Ing.

(57) **Abstract**

The invention relates to a method of air cleaning by removal of gaaseous impurities, in particular of sulphur and nitrogen oxides, carbon monooxide and ozone, by letting the medium to be cleaned stream along the surface of reactor plates. The air to be cleaned is set to between 15°C and 85°C and then made to stream along the surface of reactor plates whose active component consists of solidified mixture of urea, cyanuric acid, and amide of allophanic acid, thus producing the gaseous impurities fixation and/or their reaction with urea and/or with amide of allophanic acid and/or with cyanuric acid and achieving the removal or reduction of the gaseous impurities in the cleaned air.

## Description

### Technical field

The invention relates to a method of air cleaning by removal of gaaseous impurities, in particular of sulphur and nitrogen oxides , carbon monooxide and ozone, by letting the medium to be cleaned stream along the surface of reactor plates.

### Background art

CZ 279 833 describes a method of cleaning gases, in particular combustion products and air, by removal of sulphur and nitrogen oxides and of carbon monooxide in which the gas to be cleaned is heated or cooled to between 90°C and 110°C and set in contact with the contents of a reactor produced by heating urea up to 150°C and cooling it subsequently.

While achieving some cleaning effect, the method has the drawback of requiring high temperature of the air and/or combustion products complicating the use of the system in cooling air conditioning systems. Another serious drawback inherent to the high cleaning temperature consists in the progressive disintegration to powder of the contents of the reactor, i.e., of solidified urea, due to progressive loss of water from its crystals.

The disclosed patent application CZ 3594-96 describes a method of cleaning combustion products and air by removal of sulphur and nitrogen oxides , carbon monooxide and dioxide, and ozone in which the gas to be cleaned is cooled or heated to 100°C with a tolerance of +/- 5°C and set in contact with the reactor contents and with propane produced by pressing the contents from heat treated cyanuric acid at temperatures of, in the first stage 132°C, and in the second stage 110°C, and its subsequent cooling and solidification.

The drawbacks of this solution consist in the high costs of cyanuric acid and, like in the preceding solution, in the required high temperature of the gas to be cleaned complicating the use of the method in cooling air conditioning systems.

None of the two solutions have been put into practice so far so that neither their cleaning capacity nor their service life are known.

Well-known devices for cleaning combustion products are used chiefly for the industrial cleaning of combustion products, for instance in thermal power stations, while the known devices for air cleaning are used chiefly for collecting solid impurities while gaseous impurities such as odours are removed to a very small extent only.

The invention intends to eliminate the drawbacks of the background art and to propose a reliable method of the removal of gaseous impurities or of a considerable reduction of their content in air, apt to serve as a basis for the development and industrial (large-scale) production of air cleaning devices, separating gaseous impurities and adapted to be used in particular in air conditioning systems or for direct air cleaning in rooms such as schools, offices, hotels, conference rooms, monument objects, etc.

### Principle of the invention

The above goal has been achieved by a method of air cleaning by removal of gaseous impurities according to the invention whose principle consists in that the air to be cleaned is set to between 15°C and 85°C and then made to stream along the surface of reactor plates whose active component consists of solidified mixture of urea, cyanuric acid , and amide of allophanic acid, thus producing the gaseous impurities fixation and/or their reaction with urea and/or with amide of allophanic acid and/or with cyanuric acid and achieving the removal or a substantial reduction of the gaseous impurities in the cleaned air.

Preferably, the temperature of the air to be cleaned is set to between 40°C and 70°C.

As compared with the background art, the method according to the invention has the double advantage of reducing the required cleaning temperature and of high cleaning efficiency for all the above mentioned gaseous impurities which are either fixed to, or react with, the active substances in the reactor plates whose service life is at least 5 years for air cleaning in living rooms. The power consumption of air cleaning is reduced, and the cleaned air is freed also from some higher hydrocarbons, vapours of volatile substances, and scents.

### Examples of embodiment of the invention

### Example 1

Air to be cleaned from which mechanical impurities have been already removed is driven into the area of the reactor plates comprising urea, amide of allophanic acid (hereinafter referred to a biuret) and cyanuric acid. The reactor plates are arranged in a manner permitting the air to be cleaned to pass along the surface of the reactor plates. Before entering the area of the reactor plates, the air to be cleaned is heated or cooled to between 40°C and 70°C, the lower temperature being used preferably in summer season and the higher one in winter season when the heated ait serves also to heat the room. During the air passage along the surface of the reactor plates, the reactor plates collect gaseous impurities with possible release of nitrogen and oxygen. If the air to be cleaned contains sulphur oxides, powder sulphur can separate during the cleaning. The cleaning efficiency is directly proportionate to the surface of the reactor plates and indirectly proportionate to the velocity of streaming air. In a room of 100 m3 with average degree of contamination, the required surface area of the reactor is about 2 to 3 m2. With increasing degree of air contamination, the required surface of the reactor increases or the air streaming velocity must be reduced.

As a general statement on the method of air cleaning according to the invention it may be said that the cleaning efficiency of the cleaning increases with increasing temperature. However, at temperatures above 70°C, powder particles begin to get loosened from the reactor plates at increasing rate. At temperatures above 85°C, this process becomes very intense and prevents the method according to the invention from being used at higher temperatures.

### Example 2

During the air cleaning in a room, air having the room temperature, i.e., between 15°C and 30°C, is driven into the area of reactor plates comprising urea, biuret and cyanuric acid. Gaseous impurities contained in the air get collected (fixed) on the surface of the reactor plates and/or react with some of the active components of the reactor plates thus reducing the contents of the gaseous impurities in the air. In view of its lower cleaning intensity, this method is suitable in particular for rooms with a lower degree of contamination such as flats, offices, hotel rooms, etc.

### Example 3

The air to be cleaned, freed of mechanical impurities but having a high content of gaseous impurities, in particular of sulphur and nitrogen oxides, carbon monooxide, ozone, some higher hydrocarbons, vapours of vola-tile substances and scents, is heated to between 70°C and 85°C and then driven into the area of reactor plates comprising urea, biuret and cyanuric acid. Gaseous impurities contained in the air get intensely fixed on the surface of the reactor plates and/or react with some of the active components thus reducing the contents of the gaseous impurities in the air or even quite eliminating some of the gaseous impurities from the air. Before arriving back into the room, the air is cooled to the required temperature, and the heat thus freed can be used for heating another portion of air to be cleaned. This method is suitable in particular for cleaning air in industrial production premises.

### Example 4

A system of reactor plates is laid into a system of air conditioning device of an object such as a hospital, and sucked air containing gaseous impurities, in particular sulphur and nitrogen oxides , carbon monooxide and ozone is led to it. Before entering the system of the reactor plates, the air to be cleaned is freed of mechanical impurities and heated to between 40°C and 70°C. During the air passage along the surface of the reactor plates, gaseous impurities contained in the air get fixed to, or react with, the active components of the reactor plates thus either reducing the contents of the gaseous impurities in, or completely eliminating them from, the air. In the air conditioning device, the air is then further treated in a well-known manner.

## Claims

1. A method of air cleaning by removal of gaaseous impurities, in particular of sulphur and nitrogen oxides, carbon monooxide and ozone , by letting the medium to be cleaned stream along the surface of reactor plates, characterized by that the air to be cleaned is set to between 15°C and 85°C and then made to stream along the surface of reactor plates whose active component consists of solidified mixture of urea, cyanuric acid , and amide of allophanic acid, thus producing the gaseous impurities fixation and/or their reaction with urea and/or with amide of allophanic acid and/or with cyanuric acid and achieving the removal or reduction of the gaseous impurities in the cleaned air.

2. A method as claimed in Claim 1, characterized by that the temperature of the air to be cleaned is set to between 40°C and 70°C.
